(19)

Europäisches
Patentamt
European
Patent Office
Office européen
des brevets

(11) **EP 3 533 513 A1**

(12) **EUROPEAN PATENT APPLICATION**

(43) Date of publication:
**04.09.2019 Bulletin 2019/36**

(21) Application number: **18159244.5**

(22) Date of filing: **28.02.2018**

(51) Int Cl.:
**B01D 61/36** [(2006.01)]     **B01D 67/00** [(2006.01)]
**B01D 71/08** [(2006.01)]     **B01D 71/38** [(2006.01)]

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
• **Tsai, Yen-Ling**
**326 Yangmei Dist. Taoyuan City (TW)**

• **Cheng, Po-I**
**326 Yangmei Dist., Taoyuan City (TW)**

(72) Inventors:
• **Tsai, Yen-Ling**
**326 Yangmei Dist. Taoyuan City (TW)**
• **Cheng, Po-I**
**326 Yangmei Dist., Taoyuan City (TW)**

(74) Representative: **Lang, Christian**
**LangPatent Anwaltskanzlei**
**Ingolstädter Straße 5**
**80807 München (DE)**

(54) **PVA/GA/CS-M+ MEMBRANE OF HIGH PERMEABILITY AND SELECTIVITY FOR DEHYDRATION OF ORGANIC SOLVENT AND PREPARATION METHOD THEREOF**

(57)     Using GA as the crosslinking agent, the PVA/GA/CS-M$^+$ pervaporation membrane having high mechanical strength can be readily obtained via blending the Ag$^+$, Cu$^{2+}$, or Fe$^{3+}$-chelated CS precursor with PVA, performing excellent permeability and selectivity for the dehydration of organic solvents.

FIG. 1

**Description**

BACKGROUND OF THE INVENTION

1. FIELD OF THE INVENTION

The present invention relates to a pervaporation membrane, and particularly to a high permselectivity of a pervaporation membrane for dehydration of organic solvents and a preparation method thereof.

2. RELATED ART

Isopropanol (IPA) can be utilized as an ingredient to produce the material of acetone, and isopropylamine, and is extensively used for applications of pharmacy, agricultural materials, cosmetics, plastic materials, flavorings, and coating materials, and also functions as the solvent for oils, gums, waxes, as well as a cleaning agent in the semiconductor. Ethanol (EtOH) can be utilized as an ingredient to produce acetic acid, acetaldehyde, ether, acetic ether, and ethylamine, and also as a raw material for pharmaceutical products, cosmetics, colorants, coating materials, detergents, beverages, essences, and automotive fuels. Acetone not only can be utilized as an ingredient to produce bisphenol A, methylmethacrylate, acetone cyanhydrin, and methyl isobutyl ketone, but also can be applied to pharmaceutical applications, cosmetics, constructive materials, painting, plastics, fibers, gunpowder, resin, rubber, and photographic films. The reuse of organic solvent could significantly contribute to both of the economy advantage and environmental protection, making the importance of dehydration of organic solvent for the development of the membrane techniques . The dehydration of alcohol/water mixtures with the pervaporation membrane performs a throughput much superior to the traditional distillation method because it can exclusively break the azeotrope effect. Especially, the pervaporation membrane separation is an effective process for energy saving since it does not need to be operated under high temperature.

The solution-diffusion model has been well accepted to describe the transportation phenomena on the pervaporation membrane technique. The membrane structure could greatly affect the solution-diffusion behavior so as to influence transportation performance.

A study of Lu et al. proposed that the hydration of membranes during pervaporation appears as a dynamic process which involves a sorption-desorption balance. Membranes with their hydrophilicity could facilitate water sorption-diffusion as a result of enhancing transportation performance. Accordingly, the water-sorption property for the hydrophilic membrane becomes the key factor in the design of pervaporation membranes.

PVA, a highly hydrophilic polymer with its good film-forming and chemical-resistant properties, became an excellent candidate material for the pervaporation dehydration. However, it is difficult to conceal its swollen effect as subjected to the aqueous solution due to the presence of hydroxyl groups. By introducing the crosslinking agent, the intermolecular structure of PVA-based membranes can be substantially strengthened ascribed to the formation of stronger covalent bonding among polymer chains rather than weaker hydrogen bonding, resulted in improving on mechanical strength so as to drastically increase the stability. The pervaporation experiment is performed to assess the pervaporation performance of membranes in terms of contact angle, degree of swelling, mechanical properties, and thermal stability. Nevertheless, the incorporation of the crosslinking agent can strengthen the membrane structure, but could also consume hydrophilic polymers of polymer chains. Though the conventional use of the crosslinking agent can facilitate a more dense membrane structure formed via networking of PVA matrix, it also brings its negative effects on water permeation owing to consumption of hydroxyl groups among PVA polymers as a result of the formation of bridging. Therefore, it is imperative to improve pervaporation membranes to be used for the dehydration of organic solvents in a manner of facilitating the water permeance rate without losing the selectivity.

SUMMARY OF THE INVENTION

Accordingly, an object of the present invention is to provide a high permselectivity of a pervaporation membrane for dehydration of organic solvents and a preparation method thereof, which is capable of effectively facilitating the water permeation rate without loss of selectivity.

To achieve the above-mentioned object, a preparation method of high permselectivity of a pervaporation membrane for dehydration of an organic solvent of the present invention comprises steps of: preparing predetermined amounts of polyvinyl alcohol (PVA), chitosan (CS), and glutaraldehyde (GA) ; taking a weight unit of the CS to be dissolved in nine weight units of deionized water, with stirring for seven to ten hours at room temperature in order to form a solution; adding silver ions, copper ions, or ferric ions to the solution to form a liquid A, and keeping stirring the liquid A; taking a weight unit of PVA to be dissolved in nine weight units of deionized water, with stirring for 20~24 hours at 70°C in order to form a liquid B; adequately mixing and stirring the liquid A and liquid B for at least two hours to form a mixed solution C; and adding GA to the mixed solution C which is to be agitated for at least one hour at 70°C, pouring the mixed solution C into a Petri dish made of polyethylene for being dried in an oven for 1 day at 25°C to 50°C, so as to form the high permselectivity of the pervaporation membrane for dehydration of the organic solvent.

In one aspect of the present invention, a weight unit is 5 g, and nine weight units are 45 g.

In another aspect of the present invention, the chitosan is stirred in the deionized water for eight hours at the room temperature, and the PVA is stirred in the deionized water for 24 hours at 70°C .

In another aspect of the present invention, a pervaporation membrane is formed according to the preparation method of the present invention.

BRIEF DESCRIPTION OF THE DRAWINGS

FIG. 1 shows FTIR spectra of (a) pure PVA, (b) pure CS, (c) PVA/CS, (d) PVA/CS-$Ag^+$ ($Ag^+$: 1.17 $\times 10^{-1}$ mol.), and (e) PVA/GA/CS-$Ag^+$ ($Ag^+$: 1.17 $\times 10^{-1}$ mol.);

FIG. 2 shows TGA of (a) pure PVA, (b) pure Chitosan, (c) PVA/CS, (d) PVA/CS- $Ag^+$ ($Ag^+$: 1.17 $\times 10^{-1}$ mol.), and (e) PVA/GA/CS-$Ag^+$ ($Ag^+$: 1.17 $\times 10^{-1}$ mol.);

FIG. 3 shows contact angles of PVA/GA/CS-$Ag^+$ pervaporation membranes with different $Ag^+$ content;

FIG. 4 shows effect of water concentration in water/isopropanol mixture on degree of swelling of the PVA/GA/CS-$Ag^+$ membranes with different $Ag^+$ content;

FIG. 5 shows the total pervaporation fluxes of various water/isopropanol mixtures through PVA/GA/CS-$Ag^+$ pervaporation membranes with different amounts of $Ag^+$ at 30 °C;

FIG. 6 shows effect of $Ag^+$ concentration on pervaporation performance of water/isopropanol mixture through PVA/GA/CS-$Ag^+$ pervaporation membranes at 30 °C (90 wt.% feed isopropanol concentration);

FIG. 7 shows the total pervaporation fluxes of various water/isopropanol mixtures through PVA/GA/CS-$Cu^{2+}$ pervaporation membranes with different amounts of $Cu^{2+}$ at 30 °C;

FIG. 8 shows the total pervaporation fluxes of various water/isopropanol mixtures through PVA/GA/CS-$Fe^{3+}$ pervaporation membranes with different amount s of $Fe^{3+}$ at 30 °C;

FIG. 9 shows the total pervaporation fluxes of various water/ ethanol mixtures through PVA/GA/CS-$Ag^+$ pervaporation membranes with different amounts of $Ag^+$ at 30 °C;

FIG. 10 shows the total pervaporation fluxes of various water/ acetone mixtures through PVA/GA/CS-$Ag^+$ pervaporation membranes with different amounts of $Ag^+$ at 30 °C;

FIG. 11 shows the total pervaporation fluxes of various water/ ethanol mixtures through PVA/GA/CS-$Cu^{2+}$ pervaporation membranes with different amounts of $Cu^{2+}$ at 30 °C;

FIG. 12 shows the total pervaporation fluxes of various water/ acetone mixtures through PVA/GA/CS-$Cu^{2+}$ pervaporation membranes with different amounts of $Cu^{2+}$ at 30 °C;

FIG. 13 shows the total pervaporation fluxes of various water/ethanol mixtures through PVA/GA/CS-$Fe^{3+}$ pervaporation membranes with different amounts of $Fe^{3+}$ at 30 °C;

FIG. 14 shows the total pervaporation fluxes of various water/acetone mixtures through PVA/GA/CS-$Fe^{3+}$ pervaporation membranes with different amounts of $Fe^{3+}$ at 30 °C;

FIGS. 15a~h show SEM images of membranes of (a) pure PVA, (b) PVA/CS, (c) PVA/GA/CS-$Ag^+$ ($Ag^+$: 2.4x10$^{-2}$ mol.), (d) PVA/GA/CS-$Ag^+$ ($Ag^+$: 4.7x10$^{-2}$ mol.), (e) PVA/GA/CS-$Ag^+$ ($Ag^+$: 7.1x10$^{-2}$ mol.), (f) PVA/GA/CS-$Ag^+$ ($Ag^+$: 9.4 x10$^{-2}$ mol.), (g) PVA/GA/CS-$Ag^+$ ($Ag^+$: 1.17 x10$^{-1}$mol.), and (h) EDS ($Ag^+$: 1.17 $\times 10^{-1}$ mol.);

FIGS. 16a~e show SEM images of membranes of (a) PVA/GA/CS-$Cu^{2+}$ (1.9x10$^{-2}$ mol. $Cu^{2+}$), (b) PVA/GA/CS-$Cu^{2+}$

(3.7x10$^{-2}$ mol. Cu$^{2+}$), (c) PVA/GA/CS-Cu$^{2+}$ (5.6 x10$^{-2}$ mol. Cu$^{2+}$), (d) PVA/GA/CS-Cu$^{2+}$ (7.5 x10$^{-2}$ mol. Cu$^{2+}$), and (e) PVA/GA/CS-Cu$^{2+}$ (9.3 x10$^{-2}$ mol. Cu$^{2+}$) ;

FIGS. 17a~e show SEM images of membranes of (a) PVA/GA/CS-Fe$^{3+}$ (1x10$^{-2}$ mol. Fe$^{3+}$), (b) PVA/GA/CS-Fe$^{3+}$ (2x10$^{-2}$ mol. Fe$^{3+}$), (c) PVA/GA/CS-Fe$^{3+}$ (3 x10$^{-2}$ mol. Fe$^{3+}$), (d) PVA/GA/CS- Fe$^{3+}$ (4x10$^{-2}$ mol. Fe$^{3+}$), and (e) PVA/GA/CS- Fe$^{3+}$ (5 x10$^{-2}$ mol. Fe$^{3+}$) ;

FIGS. 18a-1~a-2 show AFM images of a pure PVA membrane;

FIGS. 19a~c show AFM images of membranes in different weight ratios of CS/PVA, where (a-1~a-2) show a weight ratio of 1/5, (b-1~b-2) show a weight ratio of 3/5, and (c-1~c-2) show a weight ratio of 5/5;

FIGS. 20a~c show AFM images of PVA/GA/CS-Ag$^+$ membranes of different amounts of Ag$^+$, where (a-1~a-2) show Ag$^+$: 2.4x10$^{-2}$ mol., (b-1~b-2) show Ag$^+$: 7.1x10$^{-2}$ mol., and (c-1~c-2) show Ag$^+$: 1.17x10$^{-1}$ mol. ;

FIGS. 21a~c show AFM images of PVA/GA/CS-Cu$^{2+}$ membranes of different amounts of Cu$^{2+}$, where (a-1~a-2) show Cu$^{2+}$: 1.9x10$^{-2}$ mol., (b-1~b-2) show Cu$^{2+}$:5.6x10$^{-2}$ mol., and (c-1~c-2) show Cu$^{2+}$: 9.3x10$^{-2}$ mol.; and

FIGS. 22a~c show AFM images of PVA/GA/CS-Fe$^{3+}$ membranes of different amounts of Fe$^{3+}$, where (a-1~a-2) show Fe$^{3+}$: 1x10$^{-2}$ mol., (b-1~b-2) show Fe$^{3+}$: 3x10$^{-2}$ mol., and (c-1~c-2) show Fe$^{3+}$: 5x10$^{-2}$ mol.

DESCRIPTION OF THE PREFERRED EMBODIMENTS

The present invention discloses a preparation method of high permselectivity of a pervaporation membrane for dehydration of an organic solvent. The preparation method comprisies the following steps.

Preparing materials: preparing predetermined amounts of polyvinyl alcohol (PVA) (Mw~125,000), deacetylation chitosan (CS) (Mw~30,000), glutaraldehyde (GA) of 25 wt.%, isopropanol (IPA) of 99%, ethanol, and acetone. All of the chemicals are reagent grade and used without further purification.

Preparing processes: take 5g of chitosan to be dissolved in 45g of deionized water, with stirring for 8 hours preferably at room temperature in order to form a solution. Then, different weights of silver ions, copper ions, or ferric ions are added to the solution to form a liquid A, and keep stirring the liquid A; in other words, the ratio between the CS and the deionized water of the liquid A is one to nine. Next, take 5g of PVA to be dissolved in 45g of deionized water, with agitating for 24 hours preferably at 70°C to form a liquid B; in other words, the ration between the PVA and the deionized water of the liquid B is one to nine. The liquids A and B are mixed and stirred for 2 hours adequately to form a mixed solution C. Finally, add GA to the mixed solution C which is to be agitated for at least one hour at 70°C, and pour the mixed solution C into a Petri dish made of polyethylene for being dried in an oven for 1 day at 40°C, so as to form the high permselectivity of the pervaporation membrane for dehydration of the organic solvent. The oven is under controlled to avoid too high or too low temperature for a negative effect on the formation of the pervaporation membrane .

Pervaporation membranes of the present invention are measured in terms of contact angle, degree of swelling, mechanical properties, and thermal stability. Fourier transform infrared spectroscopy (FTIR) analysis is utilized to identify elements and functional groups of membranes respectively, and is described as follows.

Fourier transform infrared spectroscopy (FTIR): the identification of functional groups of pervaporation membranes and their interactions are characterized by FTIR spectroscopy (Perkin-Elmer spectrometer, FTS-1000) . Infrared spectra of the pure and complex membranes are measured in the wavelength region 450 ~ 4000 cm$^{-1}$.

Thermogravimetric analysis (TGA): TGA is performed by using a Perkin-Elmer Pyris-17GA under an oxygen atmosphere scan rate 10°C/min. The range of testing temperature is from 25°C to 800°C.

Scanning electron microscopy & energy dispersive spectroscopy (SEM & EDS): the observation of membrane's morphology is performed by using a scanning electron microscope, and an energy dispersive spectroscopy for compositional study.

An atomic force microscopy is utilized to examine roughness of the pervaporation membranes and micro-surface structure.

Contact angle: the surfaces of specimens are characterized by means of a contact angle analyzer (FTA 125 Contact Angle Analyzer) for the chemical and physical properties of the pervaporation membranes. The contact angle of water is performed by placing droplets of distilled water on the surfaces of the pervaporation membranes.

Swelling measurements: prepared membranes cut into 2cm x 2cm samples are placed in precision balance (Ab304-S/FACT, Switzerland) to obtain their weight (Wd, weight of dry membranes) . The weight of liquid adsorbed (Ws) is also gained from the precision balance after the dry weight membranes put into 100g of various ratios of water/isopropanol mixtures are kept for 24 hours respectively. The degree of swelling (DS) of each membrane is calculated through the following formula (1) :

$$DS\ (\%)\ =\ (\frac{Ws\ -Wd}{Wd})\ *100\% \tag{1}$$

Pervaporation experiment: pervaporation dehydration measurement is carried out in equipment as described previously. The downstream pressure is measured by a mercury manometer and maintained at about 2 torr by a vacuum pump. The effective membrane area contacted with the feed mixture is about 7 cm$^2$, and the feed temperature of mixture is maintained at 30°C by an electric control thermometer. The compositions of permeates are measured by a refractometer (RX-5000$\alpha$, Japan). The permeation efficiency of the membranes is assessed in terms of total flux (J) and separation factor ($\alpha$sep).

$$\alpha_{sep}\ =\ \frac{P_W/\ P_{IPA}}{F_W/\ F_{IPA}} \tag{2}$$

$$\alpha_{sep}\ =\ \frac{P_W/\ P_{IPA}}{F_W/\ F_{IPA}} \tag{3}$$

As stated above, W is the mass of permeate (kg), A is the effective membrane area (m$^2$), t is the permeation time (h), P$w$, P$IPA$, P$EtOH$, and PAcetone are the mass percent of water and isopropanol, ethanol, and acetone in permeation respectively. Fw, FIPA, FEtOH, and FAcetone are the mass percent of water and isopropanol, ethanol, and acetone in feed respectively.

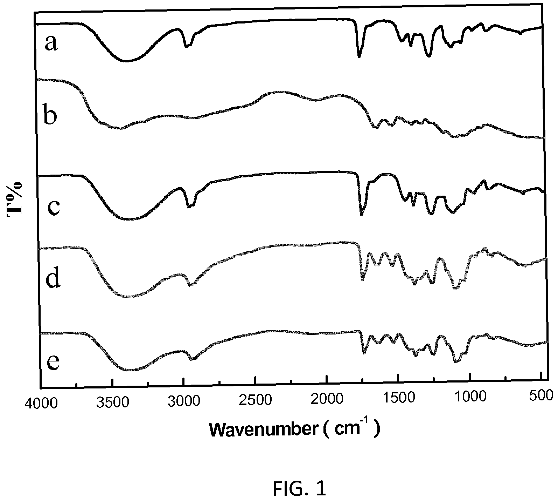

FTIR analysis: Fig. 1. shows FT-IR spectra of PVA (a), CS (b), PVA/CS (c), PVA/CS-Ag$^+$ (d), and PVA/GA/CS-Ag$^+$ (e) pervaporation membranes, in which a broad band presented at 3100-3500 cm$^{-1}$ is attributed to -OH stretching vibration. The wavenumber at 2833, 1324 and 843 cm$^{-1}$ corresponds to C-H stretching and C-H bending respectively. The peak at 1086, 1415, 1719 cm$^{-1}$ can be identified to be -C-O groups. In the chitosan's spectrum, characteristic absorption bands at 1570-1655 cm$^{-1}$ attributed to the amides I, II and -C=O groups. The bands at 1077, 1320 and 1154 cm$^{-1}$ correspond to the stretching of C-ON and glycoside groups respectively. The peak at 1719 cm$^{-1}$ of PVA/GA/CS-Ag$^+$ becomes smaller than that of (a), (c) and (d), indicating interactions between GA and the blended membrane. It is thus suggested that the formation of acetal linkage (CO-C) might also occur in the PVA/GA/CS-Ag$^+$ membrane.

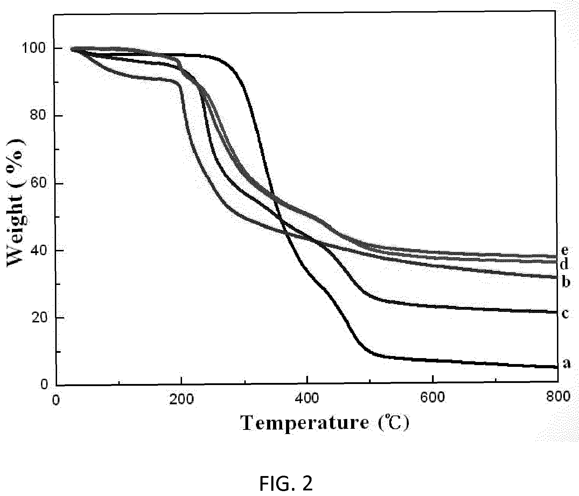

TGA analysis: TGA patterns of PVA, CS, PVA/CS, PVA/CS-Ag$^+$ and PVA/GA/CS-Ag$^+$ samples are depicted in Fig. 2, which proves that the introduction of silver ions (curve d) is capable of greatly increasing thermal-resistance of the pervaporation membrane. Moreover, the pervaporation membrane performs the best thermal stability among the samples as a result of crosslinking effect using the glutaraldehyde (curve e).

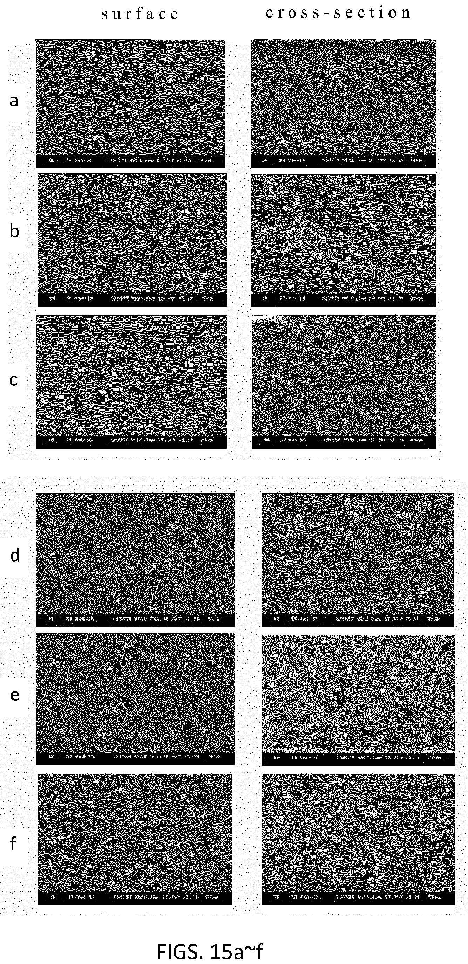

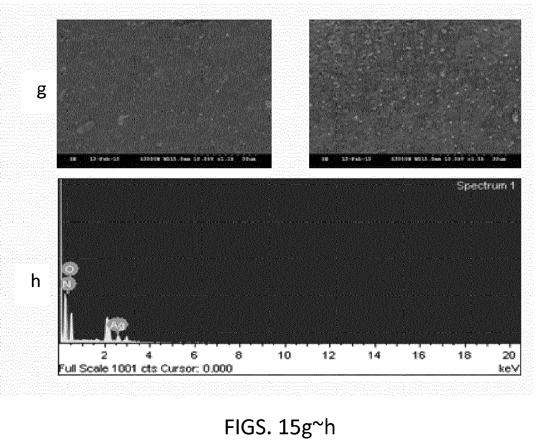

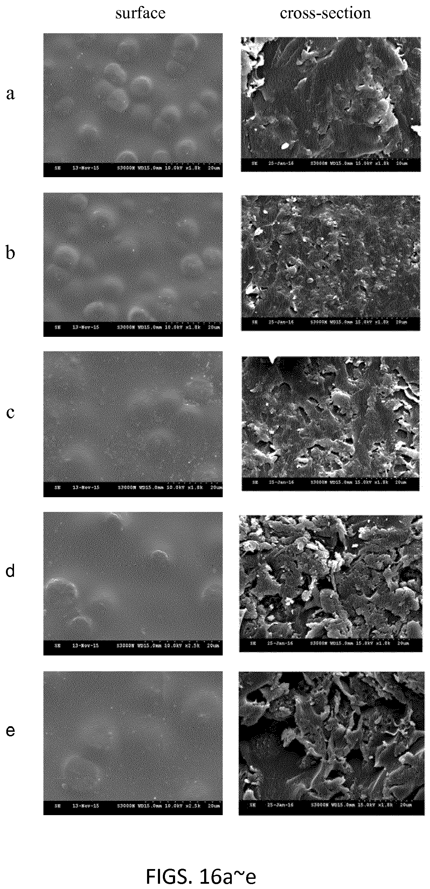

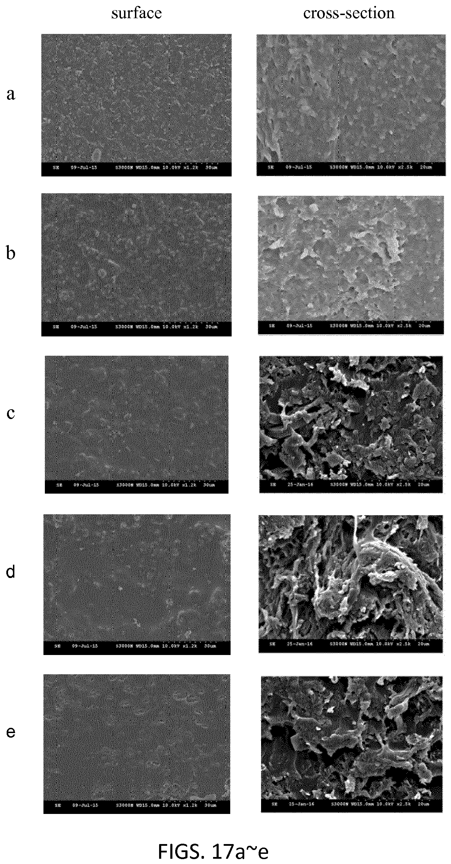

SEM morphologies & Element studies: referring to Figs. 15a~h, 16a~e, and 17a~e, when the higher the concentration of silver ions, copper ions, or ferric ions is added, the pervaporation membrane obtained occurs no mass phenomenon, and has a rougher networking structure indicating that the presence of the silver ions, copper ions, ferric ions, or other heavy metal ions chelated CS is capable of promoting intermolecular interactions of the pervaporation membrane, whereby improving the compatibility.

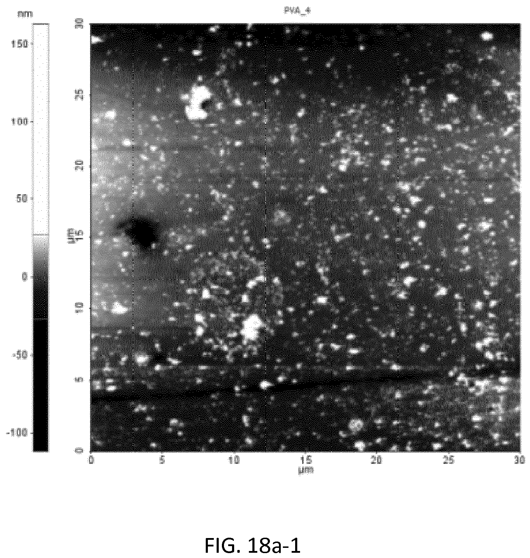

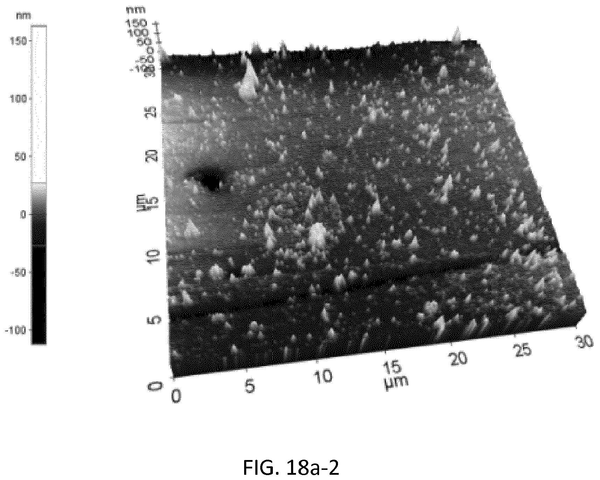

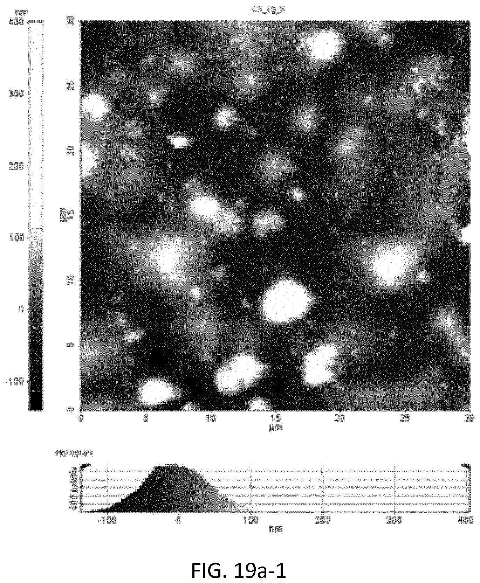

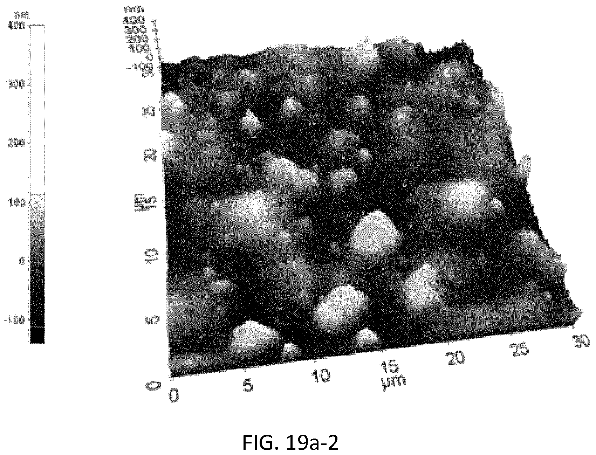

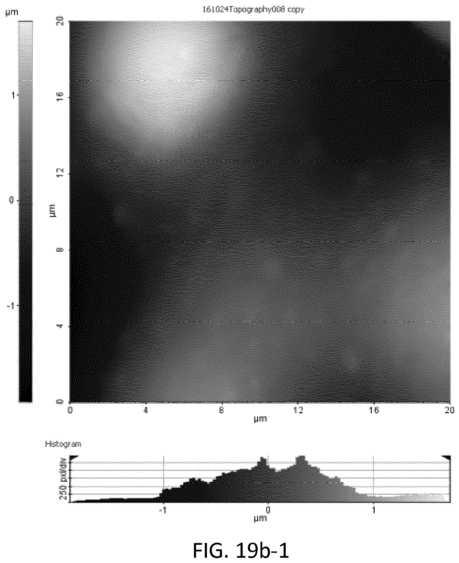

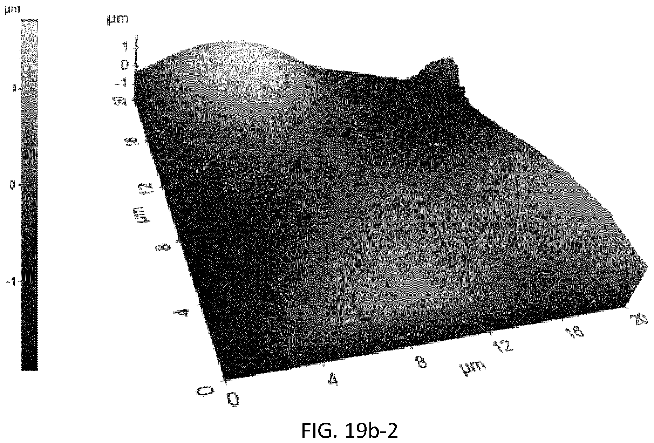

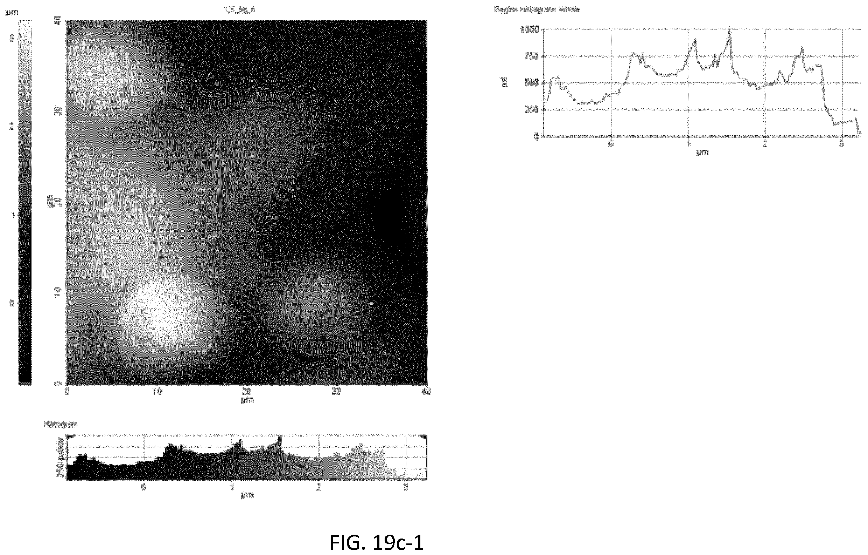

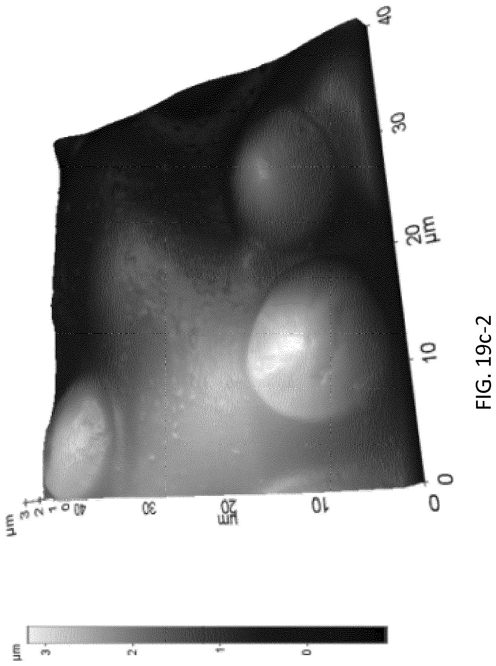

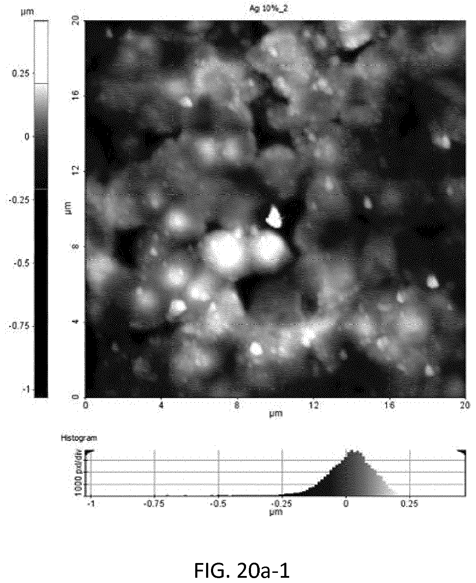

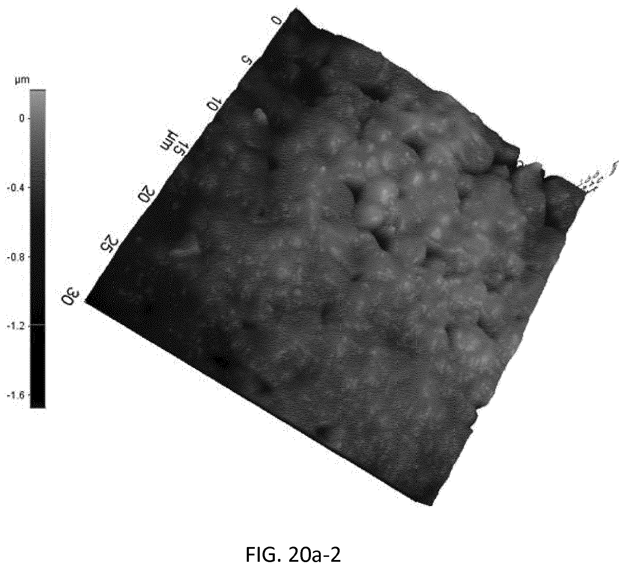

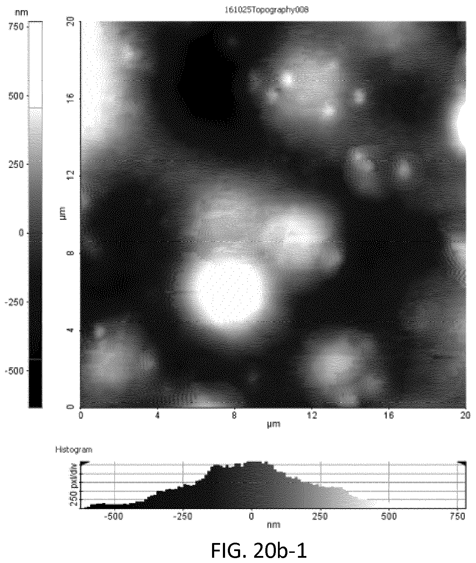

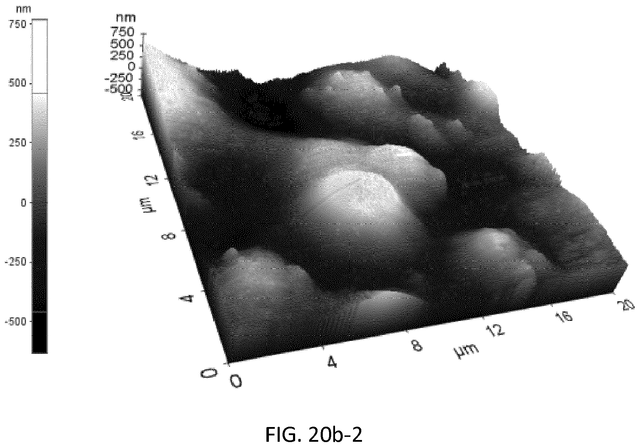

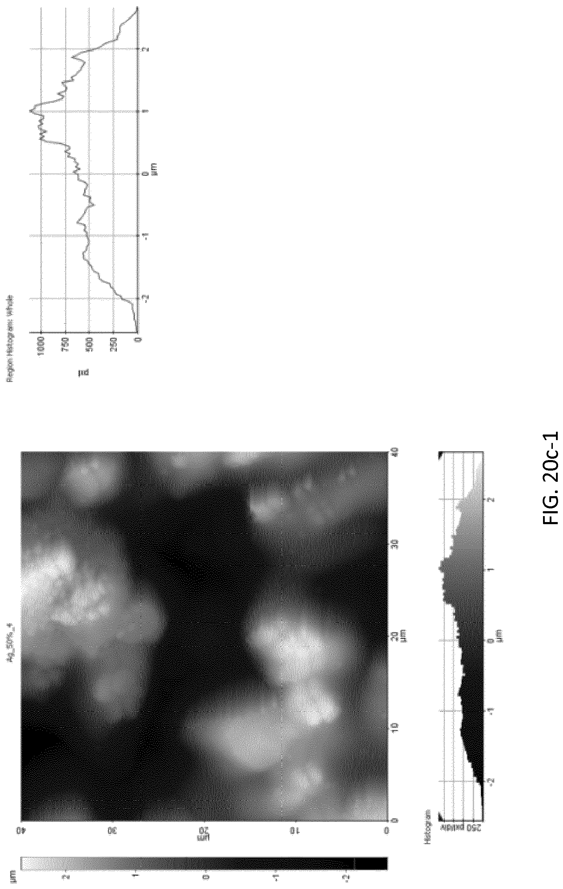

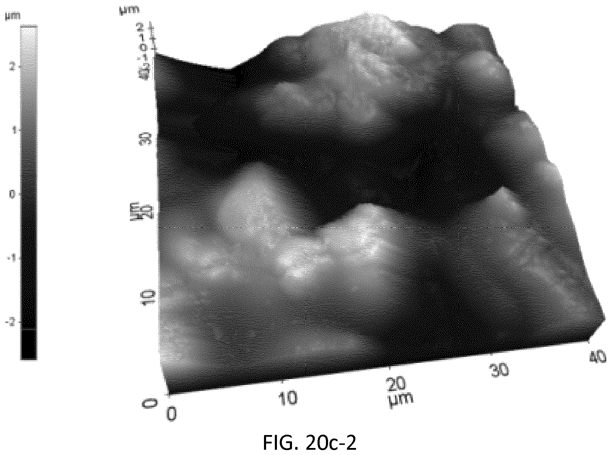

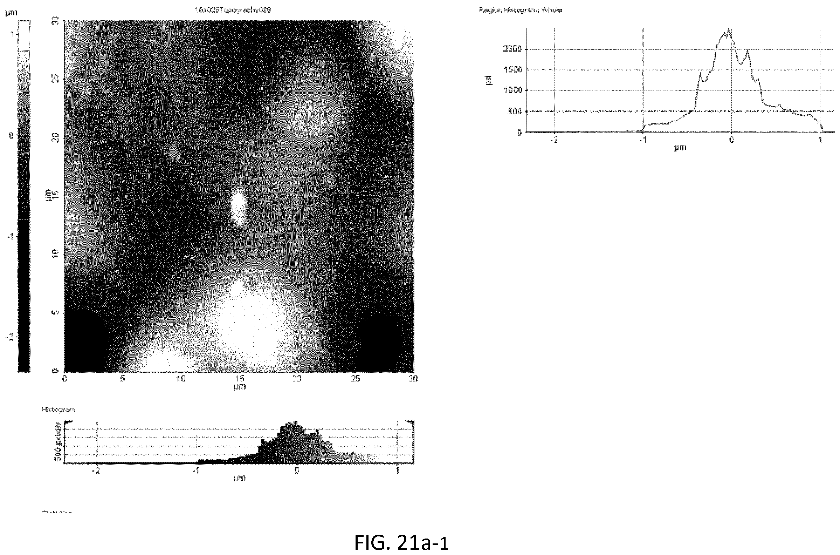

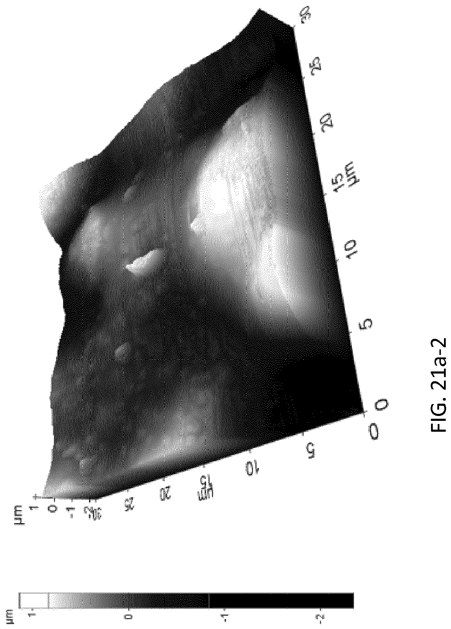

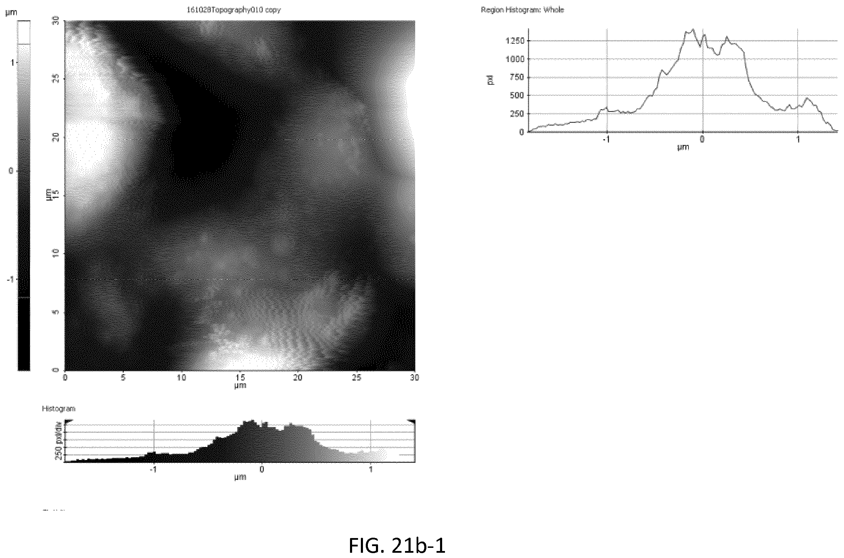

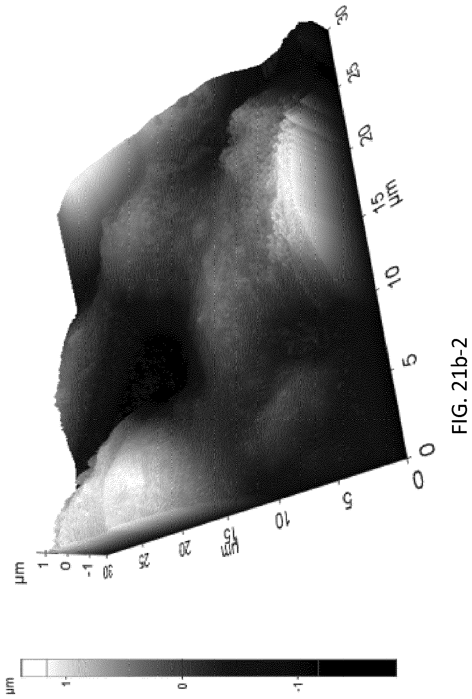

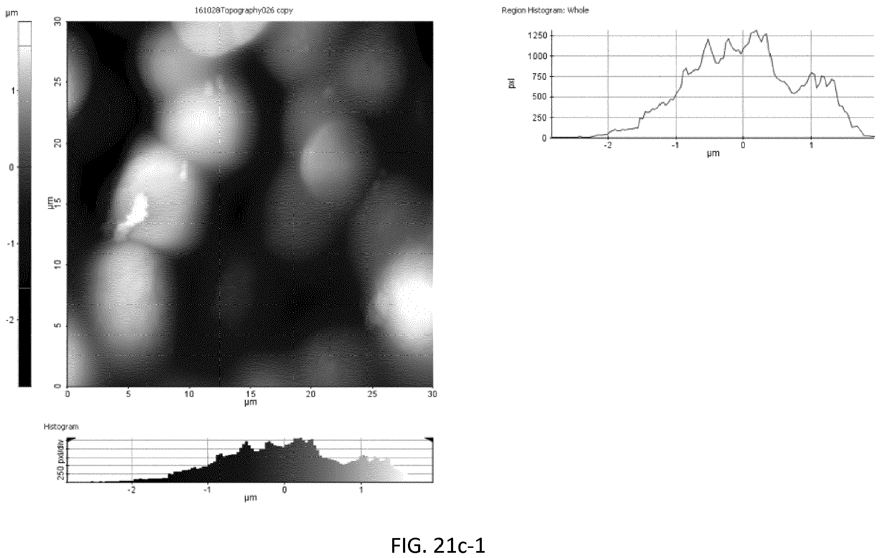

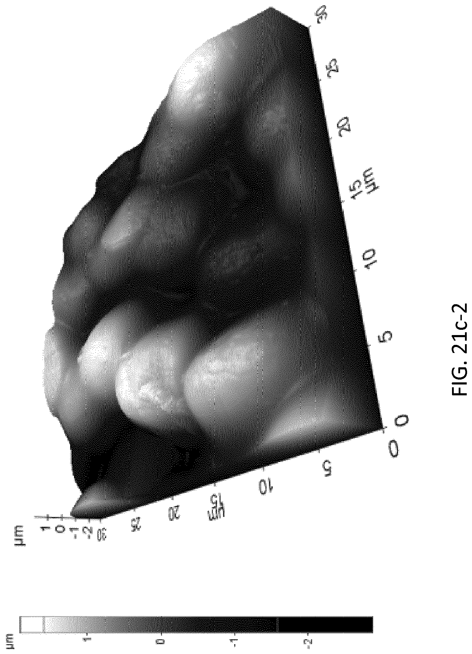

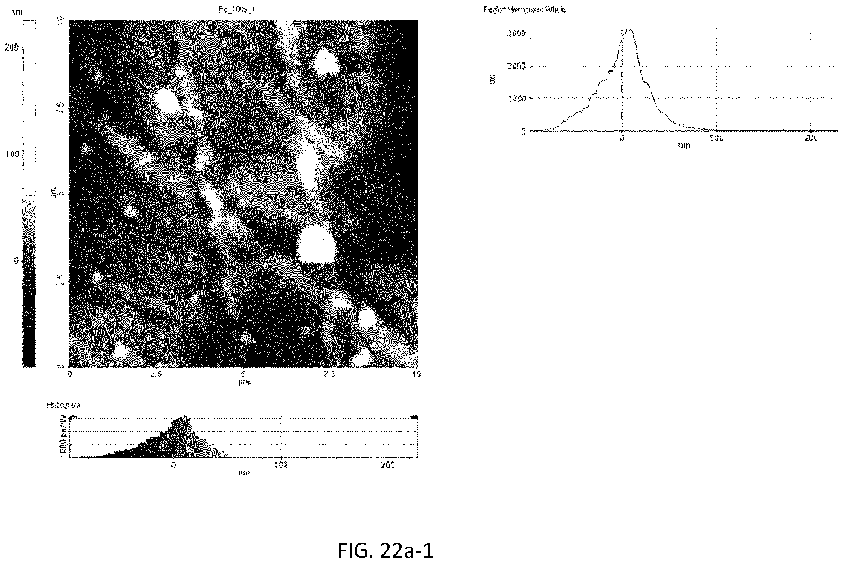

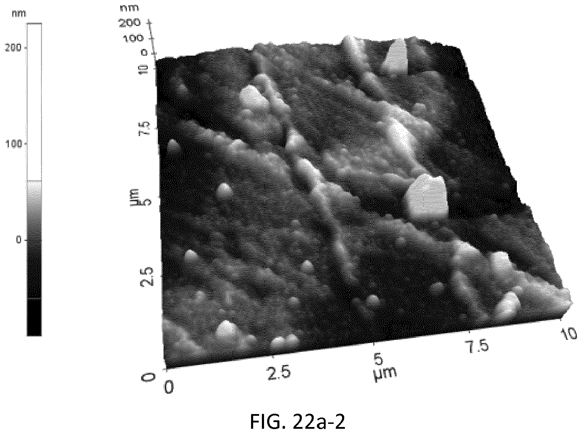

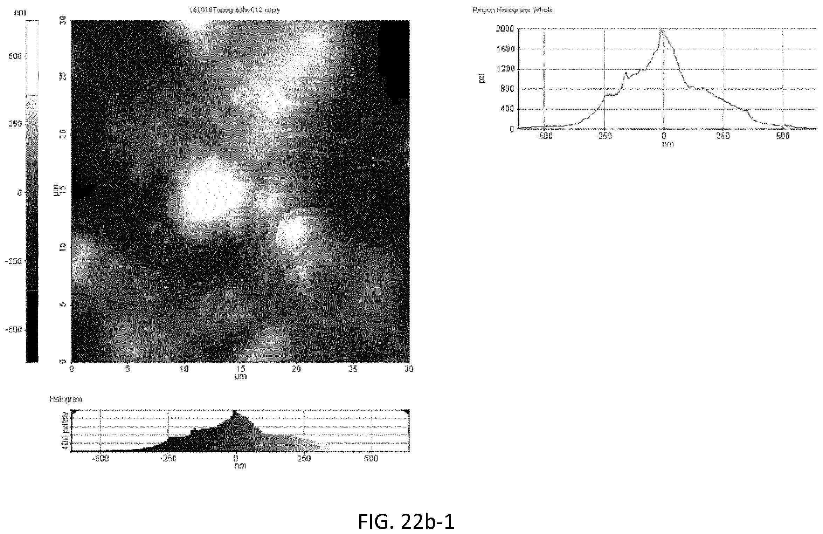

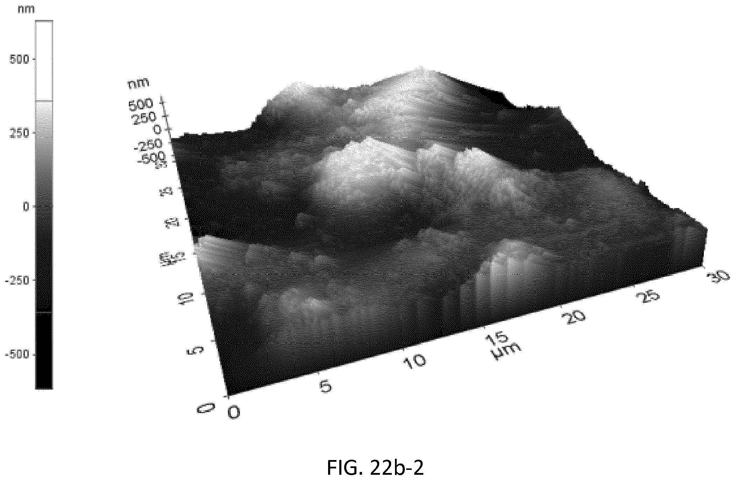

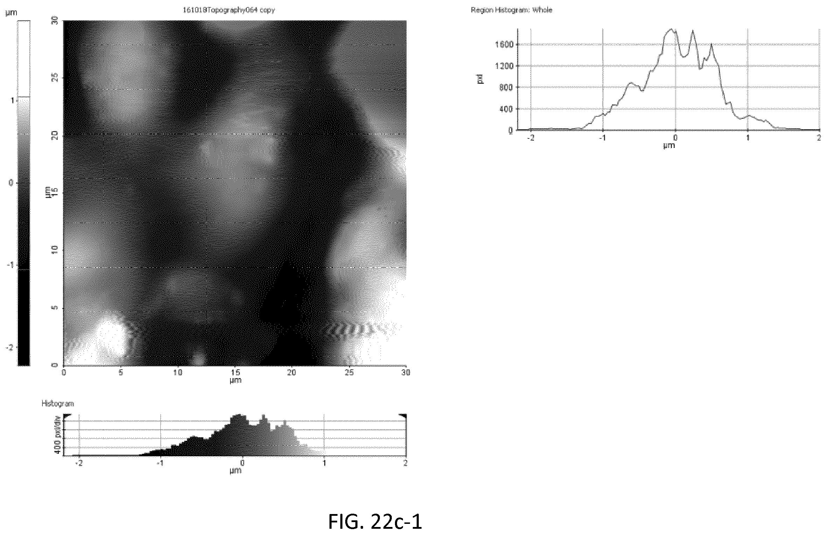

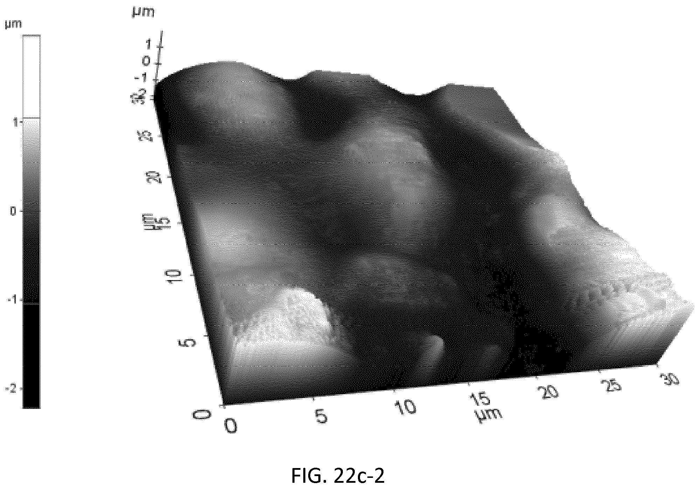

Atomic force microscopy (AFM) analysis: as shown in Figs. 18 and 19a~c, a pure PVA membrane has a more flatter surface, while a relatively larger mass occurs in the membrane when more CS is being added. As show in Figs. 20a~c, 21a~c, and 22a~c, subject to the increase of silver ions, copper ions, ferric ions, or other heavy metal ions, the agglomeration on the surface of the membrane is reduced by degrees, thereby giving rise to an increase in roughness of the surface of the membrane, and corresponding to the experimental result of SEM.

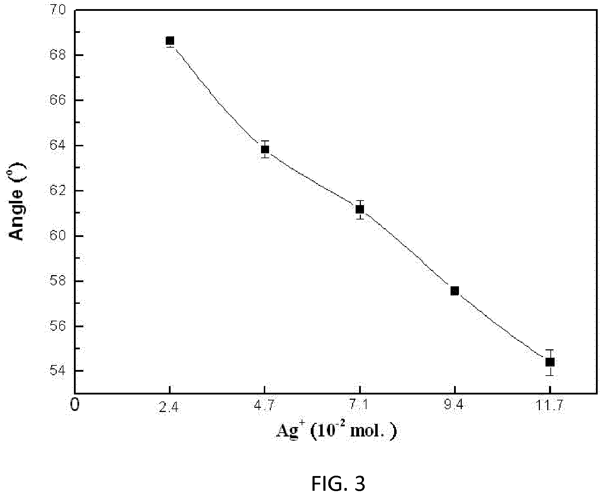

Contact angle studies: water contact angle of the PVA/GA/CS-Ag$^+$ pervaporation membrane is measured with respect to changing the content of Ag$^+$ in the polymer matrix. Observed results as shown in Fig. 3 indicate that the contact angle is found to be decreased with an increase in the concentration of silver ions. In the presence of silver ions that inherit high polarity, the PVA/GA/CS-Ag$^+$ pervaporation membrane becomes higher hydrophilicity.

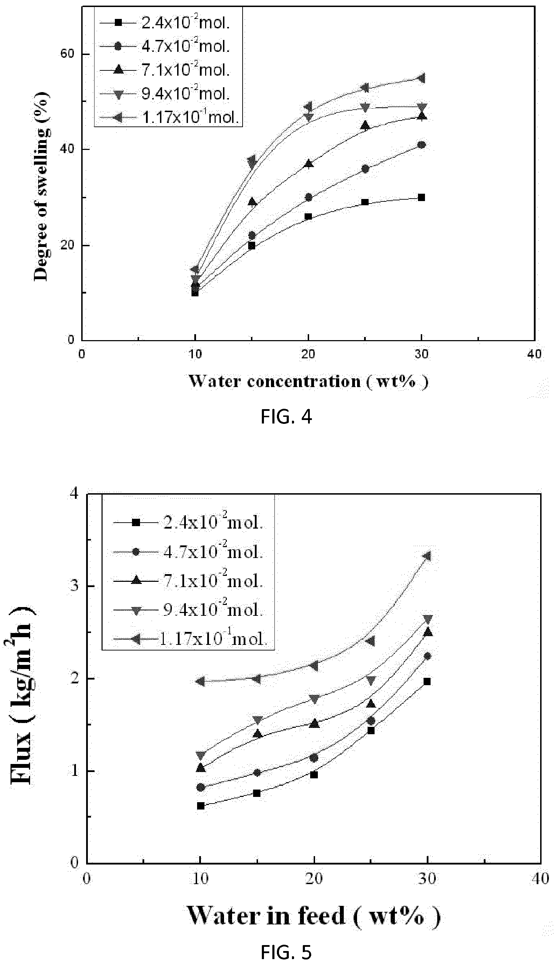

Swelling percentage: the present invention is to utilize chitosan to chelate with Ag$^+$, Cu$^{2+}$, or Fe$^{3+}$ and to be blended with PVA, which is followed a crosslinking reaction using glutaraldehyde to form a pervaporation membrane for dehydration of organic aqueous solutions. Typically, the crosslinking agent can be used to prevent a polymer matrix from swelling due to formation of a network matrix, which could result in a decrease in the hydrophilic property and hence a low throughput for dehydration applications. The water resistance of the PVA/GA/CS-$Ag^+$ membranes in the presence of various levels of the silver ions is evaluated in terms of the swelling in response to different water/isopropanol ratios, and the data is diagramed as seen in Fig. 4. Results revealed that the PVA/GA/CS-$Ag^+$ membrane prepared using a higher concentration of the silver ions in response to a higher water/isopropanol ratio reflects a higher degree of the swelling percentage. It is discovered that the presence of $Ag^+$, $Cu^{2+}$, $Fe^{3+}$, or other heavy metal ions chelating CS is capable of promoting intermolecular interactions of the PVA/GA/CS-$M^+$ pervaporation membrane, and hence a homogeneous and complete polymer matrix with better compatibility is obtained, which allows the pervaporation membrane to be swollen by absorbing more water without lossing its networking structure in a water/organic solvent mixture.

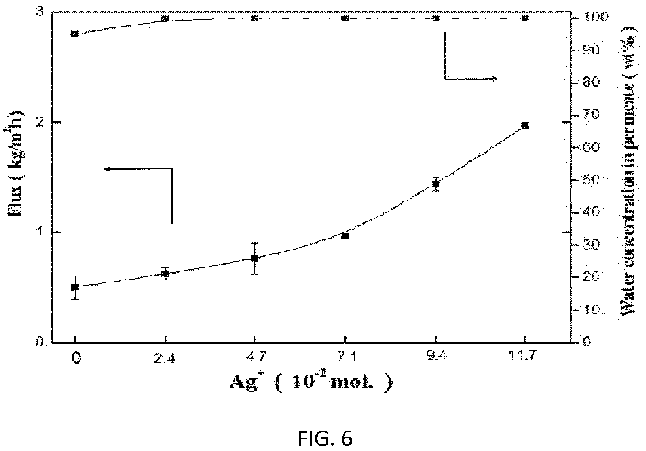

Pervaporation dehydration performance of PVA/GA/CS-$Ag^+$ membranes with different amounts of silver ions: PVA/GA/CS-$Ag^+$ membranes chelated with different concentration of silver ions are utilized to perform the pervaporation dehydration of water/isopropanol aqueous solution at 30°C. Results indicate that the more the silver ions chelated, the higher the permeation rate presented. It reflects an increase of the polarity due to the addition of silver ions chelated onto the CS. An interesting result is found as comparing Fig. 4 and Fig. 5, showing almost a mirror reflection. In Fig. 4, a higher degree of swelling is mainly ascribed to more water concentration; however, membranes chelated with more silver ions could also facilitate this effect. Similarly, more water in feed is capable of bringing a higher flux, and an increase in the content of the silver ions also greatly contributes to a raise of the permeation rate (as shown in Fig. 5). Thus it draws a conclusion that the silver ion chelated onto the CS molecule can particularly show the importance for the dehydration of water/isopropanol system under lower water in feed. The significance is also reflected in a very high water permeation concentration as shown in Fig. 6. No matter how many silver ions are introduced for the preparation of the PVA/GA/CS-$Ag^+$ pervaporation membrane, the water concentration permeation can all achieve up to 99.99 %. For the silver ion concentration of $1.17 \times 10^{-1}$ mol., the water permeation rate can even reach as high as 2.0 kg/$m^2$h.

Comparison of present invention with conventional data: pervaporation membranes with PVA-based are also used for the dehydration of the water/isopropanol systems with 10wt.% water in feed under 30°C, and results are tabulated as shown in Table 1. Typically, the permeation rate is found to be declined as the selective factor is increased. The present invention successfully performs a great improvement on both the selective factor and the permeation rate by means of the introduction of GA as a crosslinking agent and $Ag^+$, $Cu^{2+}$, or $Fe^{3+}$-chelated CS as a precursor. With the silver ion content of $1.17 \times 10^{-1}$ mol. for water in feed of 10wt.%, high flux associated with very high selective factor up to 89991 is capable of being achieved.

Table 1: Comparative study of pervaporation performance of modified PVA membranes reported in the literature for dehydration of isopropanol.

| Pervaporation Membrane | Temp. (°C) | Mass% of water in feed | Flux (Kg/$m^2$h) | Separation factor | Refs. |
|---|---|---|---|---|---|
| PVA-Gelatin (M-1) | 30 | 10 | 0.0319 | 1160 | convention |
| PVA-Gelatin (M-2) | 30 | 10 | 0.0292 | 1791 | convention |
| PVA-Gelatin (M-3) | 30 | 10 | 0.0352 | 929 | convention |
| PVA-Gelatin (M-4) | 30 | 10 | 0.0439 | 848 | convention |
| PVA-CA | 30 | 10 | 0.053 | 291 | convention |
| PVA/AA | 30 | 10 | 0.2 | 300 | convention |
| PVA-USF | 30 | 10 | 0.095 | 77 | convention |
| PVA-20/CS/USF | 30 | 10 | 0.113 | 17991 | convention |
| PVA-40/CS/USF | 30 | 10 | 0.149 | 8562 | convention |
| PVA-60/CS/USF | 30 | 10 | 0.214 | 6419 | convention |
| PVA/GA | 30 | 10 | 0.04 | 21 | convention |
| PVA-NaAlg (25:75)/GA | 30 | 10 | 0.023 | 195 | convention |
| PVA-NaAlg (50:50)/GA | 30 | 10 | 0.033 | 119 | convention |
| PVA-NaAlg (75:25)/GA | 30 | 10 | 0.039 | 91 | convention |
| PVA/GA/CS-$Ag^+$ ($2.4 \times 10^{-2}$ mol) | 30 | 10 | 0.62 | 89991 | present |
| PVA/GA/CS-$Ag^+$ ($4.7 \times 10^{-2}$ mol) | 30 | 10 | 0.76 | 89991 | present |
| PVA/GA/CS-$Ag^+$ ($7.1 \times 10^{-2}$ mol) | 30 | 10 | 0.96 | 89991 | present |

(continued)

| Pervaporation Membrane | Temp. (°C) | Mass% of water in feed | Flux (Kg/m$^2$h ) | Separati on factor | Refs. |
|---|---|---|---|---|---|
| PVA/GA/CS-Ag$^+$ (9.4 x10$^{-2}$ mol) | 30 | 10 | 1.44 | 89991 | present |
| PVA/GA/CS-Ag$^+$(1.17 x10$^{-1}$ mol) | 30 | 10 | 1.97 | 89991 | present |

PVA, poly (vinyl alcohol); CA, citric acid; AA, amic acid; USF, urea formaldehyde/sulfuric acid; CS, chitosan; GA, glutaraldehyde; NaAlg, sodium alginate.

Particularly, in accordance with the preparation method of the present invention, silver ions are replaceable with copper ions, ferric ions, or other heavy metal ions, so as to form PVA/GA/CS-Cu$^{2+}$, or PVA/GA/CS-Fe$^{3+}$ pervaporation membranes (generally indicted by PVA/GA/CS-M$^+$, wherein M$^+$ represents heavy metal ions), of which mechanical properties, such as the tensile strength is described below.

Tensile strength: the mechanical properties of PVA/CS, PVA/CS-Ag$^+$, PVA/GA/CS-Ag$^+$, PVA/GA/CS-Cu$^{2+}$, or PVA/GA/CS-Fe$^{3+}$ pervaporation membranes are evaluated in terms of the measure of the tensile strength, and test data are tabulated as shown in Table 2. When the chitosan is blended into PVA, the pervaporation membrane has doubled in the tensile strength, indicating the occurrence of strong interactions between the PVA and CS with good compatibility. The introduction of the silver ions is capable of increasing the tensile strength of the pervaporation membrane. Even in the absence of the crosslinking agent, non-negligible interactions are exhibited among the CS chelated with Ag$^+$ and PVA molecules, whereby contributing to the formation of a polymer matrix with better compatibility. The CS chelated with Ag$^+$ functions as an effective modifier for not only enhancing separation efficiency of an organic aqueous solution, but also improving mechanical strength of the polymer matrix. This can be elucidated by the comparison of the PVA/GA/CS and the PVA/GA/CS-Ag$^+$ pervaporation membranes, in which the introduction of the silver ions can greatly increase the tensile strength by 64.7%, indicating a strong interaction between Ag$^+$ chelated CS and the PVA. It can also reflect in an improvement of thermal resistance. As the data shown in Table 2, the addition of the copper ions and the ferric ions in the pervaporation membranes also presents similar results and properties as the addition of the silver ions.

Table 2: Tensile strength and tensile elongation of membranes of pervaporation membranes

| Pervaporation Membrane | Tensile strength ( Mpa ) | Tensile elongation (%) |
|---|---|---|
| Pure PVA | 9 ± 2 | 166 ± 22 |
| PVA /CS | 17 ± 1 | 141 ± 10 |
| PVA /GA/CS | 17 ± 2 | 102 ± 17 |
| PVA /CS-Ag$^+$ (1.17 x10$^{-1}$ mol. Ag$^+$) | 130 ± 3 | 87 ± 14 |
| PVA/GA/CS-Ag$^+$ (2.4 x10$^{-2}$ mol. Ag$^+$ ) | 90 ± 2 | 94 ± 17 |
| PVA/GA/CS-Ag$^+$ (4.7 x10$^{-2}$ mol. Ag$^+$ ) | 92 ± 3 | 94 ± 14 |
| PVA/GA/CS-Ag$^+$ (7.1 x10$^2$ mol. Ag$^+$ ) | 110 ± 2 | 91 ± 15 |
| PVA/GA/CS-Ag$^+$ (9.4 x10$^{-2}$ mol. Ag$^+$ ) | 145 ± 4 | 89 ± 11 |
| PVA/GA/CS-Ag$^+$ (1.17 ×10$^{-1}$ mol. Ag$^+$ ) | 150 ± 3 | 89 ± 13 |
| PVA/GA/CS-Cu$^{2+}$ (1.9 x10$^{-2}$ mol. Cu$^{2+}$) | 78 ± 3 | 60 ± 13 |
| PVA/GA/CS-Cu$^{2+}$ (3.7 x10$^{-2}$ mol. Cu$^{2+}$) | 82 ± 3 | 54 ± 9 |
| PVA/GA/CS-Cu$^{2+}$ (5.6 x10$^{-2}$ mol. Cu$^{2+}$) | 90 ± 4 | 50 ± 10 |
| PVA/GA/CS-Cu$^{2+}$ (7.5 x10$^{-2}$ mol. Cu$^{2+}$) | 94 ± 2 | 48 ± 16 |
| PVA/GA/CS-Cu$^{2+}$ (9.3 x10$^{-2}$ mol. Cu$^{2+}$) | 115 ± 5 | 45 ± 12 |
| PVA/GA/CS-Fe$^{3+}$ (1 x10$^{-2}$ mol. Fe$^{3+}$) | 70 ± 5 | 72 ± 10 |
| PVA/GA/CS-Fe$^{3+}$ (2 x10$^{-2}$ mol. Fe$^{3+}$) | 83 ± 2 | 71 ± 6 |
| PVA/GA/CS-Fe$^{3+}$ (3 x10$^{-2}$ mol. Fe$^{3+}$) | 98 ± 1 | 68 ± 11 |
| PVA/GA/CS-Fe$^{3+}$ (4 x10$^{-2}$ mol. Fe$^{3+}$) | 110 ± 3 | 50 ± 9 |

(continued)

| Pervaporation Membrane | Tensile strength ( Mpa ) | Tensile elongation (%) |
|---|---|---|
| PVA/GA/CS-Fe$^{3+}$ (5 x10$^{-2}$ mol. Fe$^{3+}$) | 120 ± 4 | 39 ± 13 |

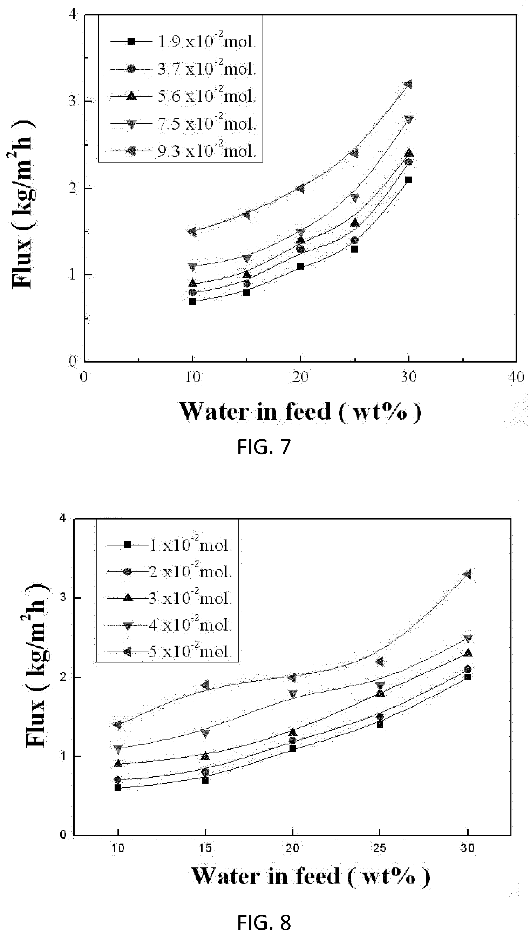

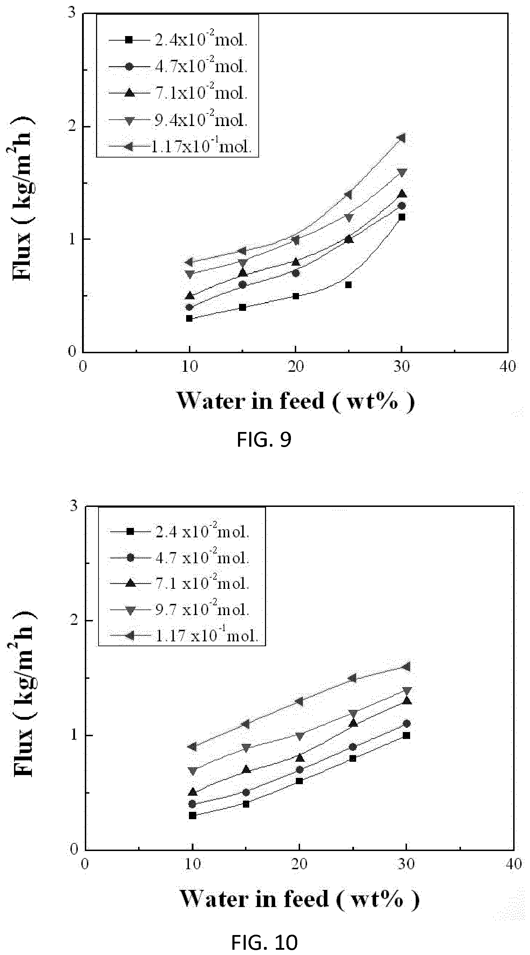

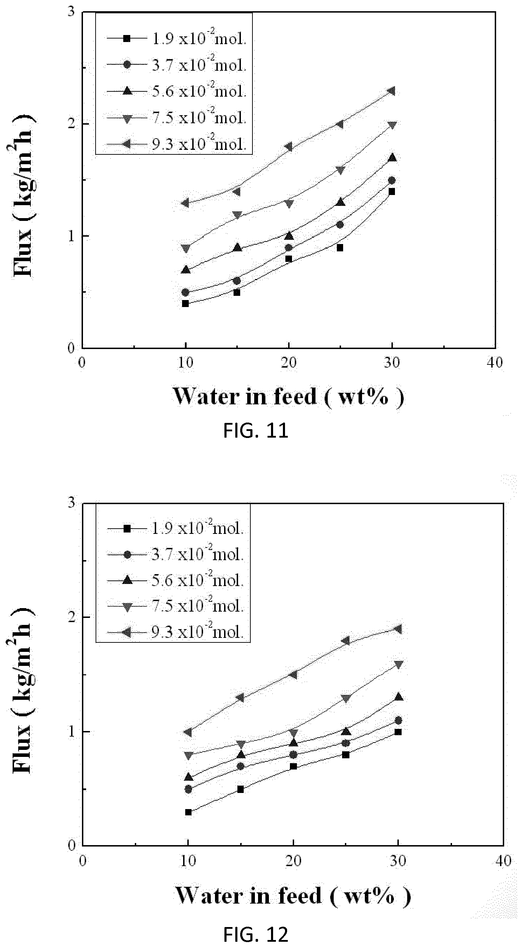

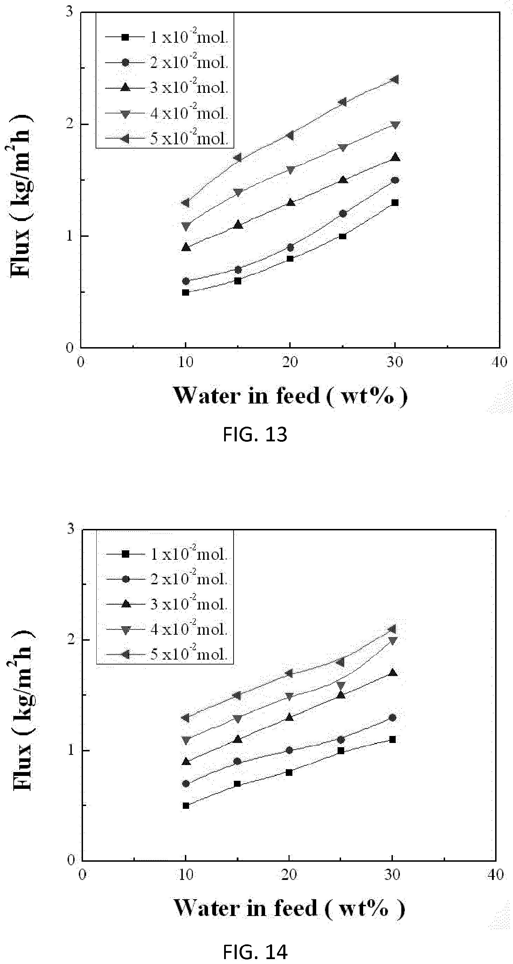

The PVA/CS, PVA/CS-Ag$^+$, PVA/GA/CS-Ag$^+$, PVA/GA/CS-Cu$^{2+}$, and PVA/GA/CS-Fe$^{3+}$ pervaporation membranes are further evaluated in terms of the pervaporation experiment. The experimental results shown in Figs. 5 to 8 have proven that, as same as the introduction of the silver ions, the introduction of the copper ions and ferric ions is capable of effectively facilitating the water permeation rate without losing the selectivity of the pervaporation membranes. In addition, as shown in Figs. 9 to 14, the pervaporation membrane of the present invention is adapted to dehydration of not only the aqueous isopropanol solution, but also the aqueous ethanol solution, and the aqueous acetone solution, further demonstrating the feature of extensive applications for the hydration of a variety of organic solutions.

Accordingly, the present invention is to utilize GA as the crosslinking agent, and the silver ion-chelated CS, copper ion-chelated CS, and ferric iron-chelated CS as the precursor, to prepare the PVA/GA/CS-Ag$^+$, PVA/GA/CS-Cu$^{2+}$, PVA/GA/CS-Fe$^{3+}$ pervaporation membranes for the dehydration of organic aqueous solution, showing good mechanical properties and thermal resistance. The introduction of the silver ion, copper ion, and ferric ion for the pervaporation membranes used for water in feed of 10% under 30°C effectively facilitates the water permeation rate without loss of selectivity. In practice, based on the membrane prepared under the Ag$^+$ content of 1.17x10$^{-1}$ mol. , the present invention demonstrates that the highest permeation rate of 2.0 kg/m$^2$h accompanied with a separation factor up to 89991 is achieved for the pervaporation dehydration of an isopropanol solution with the high concentration of 90 wt. % under a temperature of 30°C. In contrast, conventional PVA-based membranes under the same experimental conditions as shown in Table 1 illustrate a decline in selectivity as the water permeation rate is increased. The pervaporation membrane of the present invention also shows that the efficiency of the dehydration of the organic aqueous solution under lower water concentration in feed is favorable for high degree of purification applications.

It is understood that the invention may be embodied in other forms within the scope of the claims. Thus the present examples and embodiments are to be considered in all respects as illustrative, and not restrictive, of the invention defined by the claims.

## Claims

1. A preparation method of high permselectivity of a pervaporation membrane for dehydration of an organic solvent, comprising steps of:

   preparing predetermined amounts of polyvinyl alcohol (PVA), chitosan (CS), and glutaraldehyde (GA);
   taking a weight unit of the CS to be dissolved in nine weight units of deionized water, with stirring for seven to ten hours at room temperature in order to form a solution;
   adding silver ions, copper ions, or ferric ions to the solution to form a liquid A, and keeping stirring the liquid A;
   taking a weight unit of PVA to be dissolved in nine weight units of deionized water, with stirring for 20~24 hours at 70°C in order to form a liquid B;
   adequately mixing and stirring the liquid A and liquid B for at least two hours to form a mixed solution C; and
   adding GA to the mixed solution C which is to be agitated for at least one hour at 70°C, pouring the mixed solution C into a Petri dish made of polyethylene for being dried in an oven for 1 day at 25°C to 50°C, so as to form the high permselectivity of the pervaporation membrane for dehydration of the organic solvent.

2. The method of claim 1, wherein the organic solvent is an aqueous isopropanol solution, an aqueous ethanol solution, or an aqueous acetone solution.

3. The method of claim 1, wherein the weight unit is 5g of deionized water, and the nine weight units is 45g of CS and PVA respectively.

4. The method of claim 1, wherein the chitosan is stirred in the deionized water for eight hours at the room temperature, and the PVA is stirred in the deionized water for 24 hours at 70°C .

5. The method of claim 1, wherein a dense cross-structure of the pervaporation membrane is being obtained by adding silver ions, copper ions, or ferric ions of higher concentrations, whereby further indicating that the silver ions, copper ions, or ferric ions chelated with CS interact with PVA so as to improve the compatibility between CS and PVA.

6. The method of claim 1, wherein using of the glutaraldehyde brings about a crosslinking effect, which enables the pervaporation membrane to perform a best thermal stability.

7. The method of claim 1, wherein the presence of the silver ions, copper ions, or ferric ions chelated with CS are capable of promoting intermolecular interactions of the pervaporation membrane, so as to produce a homogeneous polymer matrix with better compatibility, which allows the complete polymer matrix to be swollen by absorbing more water without loss of networking structure of homogeneous and complete polymer matrix in water/organic solvent mixtures.

8. A pervaporation membrane that is formed according to the preparation method of claim 1.

9. A pervaporation membrane of high permselectivity for dehydration of an organic solvent, comprising polyvinyl alcohol, chitosan, and glutaraldehyde functioning as a crosslinking agent for the polyvinyl alcohol and chitosan, and silver ions, copper ions, or ferric ions.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

surface          cross-section

FIGS. 15a~f

FIGS. 15g~h

EP 3 533 513 A1

surface    cross-section

FIGS. 16a~e

21

surface          cross-section

FIGS. 17a~e

FIG. 18a-1

FIG. 18a-2

FIG. 19a-1

FIG. 19a-2

FIG. 19b-1

FIG. 19b-2

FIG. 19c-1

FIG. 19c-2

FIG. 20a-1

FIG. 20a-2

FIG. 20b-1

FIG. 20b-2

FIG. 20c-1

FIG. 20c-2

FIG. 21a-1

FIG. 21a-2

FIG. 21b-1

FIG. 21b-2

FIG. 21c-1

FIG. 21c-2

FIG. 22a-1

FIG. 22a-2

FIG. 22b-1

FIG. 22b-2

FIG. 22c-1

FIG. 22c-2

Europäisches
Patentamt

European
Patent Office

Office européen
des brevets

# EUROPEAN SEARCH REPORT

Application Number

EP 18 15 9244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKISA GHOBADI ET AL: "Modified poly(vinyl alcohol)/chitosan blended membranes for isopropanol dehydration via pervaporation: Synthesis optimization and modeling by response surface methodology", JOURNAL OF APPLIED POLYMER SCIENCE, vol. 134, no. 11, 15 March 2017 (2017-03-15), XP055496477, ISSN: 0021-8995, DOI: 10.1002/app.44587 * the whole document * | 1-9 | INV. B01D61/36 B01D67/00 B01D71/08 B01D71/38 |
| X | SOHEIL ZARGHAMI ET AL: "Adsorption Behavior of Cu(II) Ions on Crosslinked Chitosan/Polyvinyl Alcohol Ion Imprinted Membrane", JOURNAL OF DISPERSION SCIENCE AND TECHNOLOGY., vol. 36, no. 2, 3 February 2015 (2015-02-03), pages 190-195, XP055496478, NEW YORK, NY, US ISSN: 0193-2691, DOI: 10.1080/01932691.2014.894916 * the whole document * | 1-9 | |

TECHNICAL FIELDS
SEARCHED      (IPC)

B01D

The present search report has been drawn up for all claims

| Place of search | Date of completion of the search | Examiner |
|---|---|---|
| Munich | 31 July 2018 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)